(19) Europäisches Patentamt
European Patent Office
Office européen des brevets

(11) **EP 2 162 630 B1**

(12) **FASCICULE DE BREVET EUROPEEN**

(45) Date de publication et mention
de la délivrance du brevet:
**18.05.2011 Bulletin 2011/20**

(21) Numéro de dépôt: **08806128.8**

(22) Date de dépôt: **30.06.2008**

(51) Int Cl.:
*F16D 48/06* (2006.01)    *G05D 3/00* (2006.01)
*F16D 48/08* (2006.01)    *B60W 10/02* (2006.01)
*B60W 10/18* (2006.01)

(86) Numéro de dépôt international:
**PCT/FR2008/051202**

(87) Numéro de publication internationale:
**WO 2009/007628 (15.01.2009 Gazette 2009/03)**

(54) **PROCEDE DE TRAITEMENT D'UN SIGNAL ISSU D'UN CAPTEUR DE POSITION D'UN ORGANE DE COMMANDE D'UN VEHICULE AUTOMOBILE**

VERFAHREN ZUR VERARBEITUNG EINES SIGNALS AUS DEM POSITIONSSENSOR EINES STEUERUNGSELEMENTS EINES KRAFTFAHRZEUGS

METHOD FOR PROCESSING A SIGNAL ORIGINATING FROM A POSITION SENSOR OF A MOTOR VEHICLE CONTROL MEMBER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.07.2007 FR 0704891**

(43) Date de publication de la demande:
**17.03.2010 Bulletin 2010/11**

(73) Titulaire: **Renault S.A.S.**
**92100 Boulogne-Billancourt (FR)**

(72) Inventeurs:
• **DESFRICHES, Christophe**
**F-27120 Pacy-sur-Eure (FR)**
• **MONTI, Alessandro**
**F-92250 La Garenne Colombes (FR)**
• **POTHIN, Richard**
**F-78760 Jouars-Pontchartrain (FR)**

(56) Documents cités:
DE-A1- 10 318 883    FR-A- 2 828 450
US-A- 5 630 773    US-A1- 2004 159 523

**Description**

L'invention concerne un dispositif d'assistance aux manoeuvres en côte d'un véhicule automobile et, plus particulièrement, un procédé de traitement d'un signal de position d'un organe de commande du véhicule, le signal de position étant utilisé dans un tel dispositif d'assistance.

On connaît de la demande FR 2 828 450 un tel dispositif d'assistance. Celui-ci comprend principalement un moyen d'estimation de pente dans laquelle le véhicule positionné, un moyen pour interpréter les actions du conducteur, un moyen pour déterminer une courbe caractéristique d'embrayage du véhicule (c'est-à-dire une courbe faisant correspondre la position de pédale d'embrayage au couple transmissible par l'embrayage) et un moyen pour désactiver automatiquement un moyen de freinage du véhicule. Grâce à ces moyens, le véhicule automobile peut être maintenu en position dans une pente dans un état dans lequel les roues motrices sont débrayées du moteur et peut être mis en mouvement (dans le sens de la montée de la pente) par les seules actions du conducteur sur les pédales d'accélérateur et d'embrayage (c'est-à-dire sans que celui ait à agir le frein de parking). En effet, la stratégie de fonctionnement du dispositif d'assistance est de relâcher le freinage dès que le couple moteur transmis aux roues est suffisant pour compenser l'effort sur le véhicule dû à la pente et à la gravité.

Du fait du temps de réaction nécessaire pour que le système de frein se desserre, on n'utilise pas la position instantanée de la pédale d'embrayage pour déterminer le couple qui est transmis par l'embrayage mais, une position anticipée de la pédale d'embrayage, c'est-à-dire une estimation de la position qu'occupera la pédale d'embrayage au moment où le freinage sera relâché. Pour calculer cette position anticipée, on utilise la dérivée instantanée de la valeur de position de pédale d'embrayage que l'on multiplie par une constante de temps prédéterminée, le résultat étant ajouté à la valeur de position instantanée de la pédale d'embrayage.

Ce type de dispositif présente des inconvénients. Il est peu robuste. En effet, le bruit présent dans le signal issu d'un capteur de position de la pédale d'embrayage est de nature à perturber très sensiblement la valeur de la position anticipée de la pédale d'embrayage. Cette perturbation peut être de nature à provoquer des desserrages du système de freinage se produisant trop tôt ou trop tard. En outre, le dispositif présente des difficultés à gérer des mouvements rapides de la pédale d'embrayage.

Le but de l'invention est de fournir un procédé de traitement d'un signal de position de pédale d'embrayage permettant d'obvier aux inconvénients évoqués précédemment et d'améliorer les procédés de détermination connus de l'art antérieur. En particulier, l'invention propose un procédé de détermination permettant d'éviter que des desserrages du système de frein se produisent trop tôt ou trop tard.

Selon l'invention, le procédé permet de traiter d'un signal issu d'un capteur de position d'un organe de commande d'un embrayage vehicule automobile destiné à l'élaboration d'un signal traité de position de l'organe de commande d'embrayage, le signal traité de position étant utilisé dans un dispositif d'assistances aux manoeuvres en côte du véhicule automobile II est caractérisé en ce qu'il comprend :

- une phase de filtrage, par un premier filtre, du signal issu du capteur pour obtenir un premier signal filtré,
- une phase de substitution dans laquelle on fournit, comme signal traité, le premier signal filtré auquel on ajoute un deuxième signal si la valeur instantanée du premier signal filtré est supérieure à la valeur d'un premier paramètre de seuil et dans laquelle on fournit, comme signal traité, le signal issu du capteur dans le cas contraire.

Le deuxième signal peut être fonction d'un troisième signal obtenu par filtrage, par un deuxième filtre, du signal issu du capteur puis par dérivation par rapport au temps du signal résultant.

Le deuxième signal peut être borné par les valeurs d'un deuxième paramètre et d'un troisième paramètre.

Les valeurs des deuxième et troisième paramètres peuvent être opposées.

Le deuxième signal peut être obtenu par multiplication du troisième signal par la valeur d'un quatrième paramètre.

La valeur du quatrième paramètre peut être une constante prédéfinie.

La valeur du quatrième paramètre peut être variable.

La valeur du premier paramètre peut être une constante prédéfinie.

La valeur du premier paramètre peut être déduite d'une grandeur caractéristique de l'organe de commande.

Le support de données selon l'invention comprend un algorithme pour la mise en oeuvre du procédé de traitement défini précédemment.

Selon l'invention, le dispositif de traitement du signal issu d'un capteur de position d'un organe de commande d'un véhicule automobile et destiné à l'élaboration d'un signal traité de position de l'organe de commande, est caractérisé en ce qu'il comprend des moyens matériels et logiciels pour la mise en oeuvre du procédé de traitement défini précédemment.

Les moyens matériels peuvent comprendre un premier filtre, un deuxième filtre, des moyens de calcul, une mémoire et des moyens de dérivation.

Selon l'invention, le dispositif d'assistance aux manoeuvres en côte d'un véhicule automobile est caractérisé en ce qu'il comprend un dispositif de traitement défini précédemment.

Le dessin annexé représente, à titre d'exemple, un mode de réalisation d'un dispositif d'assistance selon l'invention et un mode d'exécution d'un procédé de détermination d'une position anticipée d'une pédale d'embrayage selon l'invention.

La figure 1 est un schéma d'un véhicule équipé d'un dispositif d'assistance selon l'invention.

La figure 2 est un organigramme schématisant le fonctionnement global d'un dispositif d'assistance selon l'invention.

La figure 3 est un organigramme schématisant le fonctionnement détaillé du bloc « décollage » apparaissant à la figure précédente.

La figure 4 est un organigramme d'un mode d'exécution d'un procédé de détermination d'une position anticipée d'une pédale d'embrayage selon l'invention.

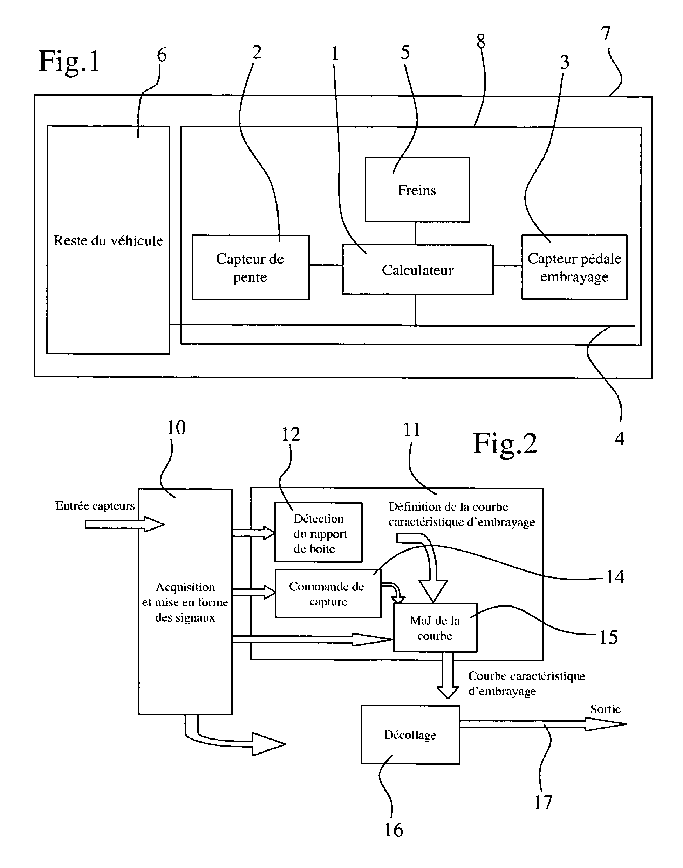

Le véhicule automobile 7 représenté à la figure 1 comprend un dispositif d'assistance aux manoeuvres en côte 8. Ce dispositif est connecté au reste du véhicule 6 avec lequel il échange des informations via une liaison bus CAN 4.

Le dispositif d'assistance comprend principalement :

- un calculateur 1 connecté à la liaison bus CAN et

- un capteur 2 de pente dans laquelle se trouve le véhicule, un capteur de position de pédale d'embrayage et un système de freinage de parking 5 reliés au calculateur.

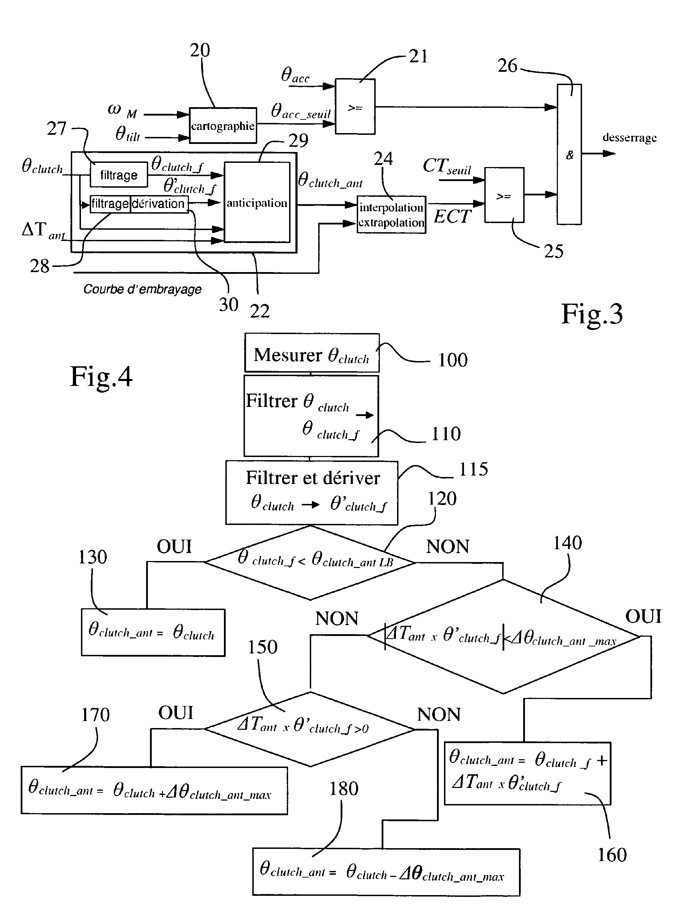

La structure et le fonctionnement du dispositif d'assistance sont décrits en détails de la ligne 23 page 12 à la ligne 27 page 33 de la publication de la demande de brevet français FR 2 828 450 - A1 en référence aux figures 1 à 8. En particulier, sa structure est décrite de la ligne 23 page 12 à la ligne 16 page 16 en référence aux figures 1 et 2 et de la ligne 4 page 20 à la ligne 23 page 22 en référence à la figure 4.

Le système de frein de parking est en particulier décrit de la ligne 10 page 14 à la ligne 11 page 15 de la publication susmentionnée en référence à la figure 2.

Le reste du véhicule comprend les organes classiques d'un véhicule actuel et notamment des moyens pour déterminer et transmettre des informations véhicule telles que le régime moteur, la vitesse ou la position de la pédale d'accélérateur.

Dans le reste de la description, il sera fait usage de différentes grandeurs physiques et de leurs désignations dont voici une liste de correspondance :

| | |
|---|---|
| CT | Couple transmis par l'embrayage, |
| $\theta_{acc}$ | Signal de position de la pédale d'accélérateur, |
| $\theta_{clutch}$ | Signal de position de la pédale d'embrayage, |
| $\theta_{clutch}$ | Signal de la dérivée de la position de la pédale d'embrayage, |
| $\theta_{tilt}$ | Pente de la rampe sur laquelle se trouve le véhicule, |
| m | Masse du véhicule, |
| b | Position du levier de boîte de vitesse, |
| r(b) | Relation donnant le rapport de démultiplication entre l'arbre de sortie du moteur et l'arbre de roue motrice en fonction de la position du levier de vitesse, |
| $\rho_{wheels}$ | Rayon des pneumatiques des roues motrices sous charge, |
| $\omega_M$ | Régime moteur. |

Comme décrit précédemment, le moteur du véhicule de masse m stationné dans une pente $O_{tilt}$ doit fournir un couple supérieur à $CT_{seuil}$ pour faire avancer le véhicule.

$CT_{seuil} = r(b) \times \rho_{wheels} \times m \times g \times \sin(\theta_{tilt})$ où g est la norme du champ de gravitation terrestre.

Comme expliqué, selon la stratégie utilisée par le dispositif d'assistance, le système de frein est relâché à l'arrêt en phase d'embrayage dès que le couple transmis par l'embrayage est estimé être supérieur au couple $CT_{seuil}$. Une opération délicate effectuée par le dispositif d'assistance réside dans cette estimation du couple transmis. Pour ce faire le dispositif d'assistante utilise notamment une information de position anticipée de la pédale d'embrayage et une courbe caractéristique d'embrayage.

Le fonctionnement global du dispositif d'assistance est expliqué ci-après en référence à la figure 2.

Dans un premier bloc fonctionnel 10, on acquiert et on met en forme les signaux en provenance des divers capteurs équipant le véhicule. Ces signaux sont notamment transmis par l'intermédiaire de la liaison bus CAN.

Dans un deuxième bloc fonctionnel 11, on définit la courbe caractéristique d'embrayage. Ce bloc comprend :

- un sous-bloc 12 dans lequel on détermine le rapport de boîte de vitesse actuellement sélectionné,
- un sous-bloc 14 dans lequel on acquiert des données, notamment de position de pédale d'embrayage et de couple transmis par l'embrayage, et
- un sous-bloc 15 dans lequel on utilise les informations du bloc 10 et des sous-blocs 12 et 14 pour mettre à jour la courbe caractéristique d'embrayage.

Dans un troisième bloc fonctionnel 16, on utilise la courbe caractéristique d'embrayage définie dans le bloc 11 et des informations du bloc 10 pour déterminer l'état que doit occuper une sortie 17 commandant le relâchement du système de freinage de parking.

La structure des blocs 10 et 11 et leur fonctionnement sont identiques à ceux décrits dans la publication de la demande FR 2 828 450 - A1.

Le fonctionnement de ce troisième bloc fonctionnel 16 est décrit en détail ci-après en référence à la figure 3.

Dans un premier comparateur 20, on délivre en fonction du régime moteur et de la pente dans laquelle se trouve le véhicule, une position seuil de pédale d'accélération en deçà de laquelle, le desserrage ou relâchement du système de frein ne doit pas être commandé. Cette position seuil est définie par une cartographie, c'est-à-dire que, dans une mémoire du dispositif d'assistance, sont enregistrées des données faisant correspondre en cote une valeur seuil de position pour des valeurs de régime moteur en abscisses et de pente en ordonnées.

Dans un comparateur 21, on compare la position instantanée de la pédale d'accélérateur $\theta_{acc}$ avec la valeur seuil établie en sortie du bloc 20. Si la valeur de position instantanée de la pédale d'accélérateur est supérieure à la valeur seuil établie en sortie du comparateur 20, la sortie du comparateur 21 est active ou à l'état haut.

Dans un dispositif de traitement de signal 22, on utilise les données de position de la pédale d'embrayage et d'un paramètre temporel $\Delta T_{ant}$ pour fournir en sortie un signal de position anticipée de la pédale d'embrayage $\theta_{clutch\_ant}$.

Pour ce faire, le signal de position $8_{clutch}$ issu du capteur 3 de position de pédale d'embrayage est fourni à un premier filtre 27. Ce premier filtre est un filtre passe-bas. En utilisant par exemple un filtre du premier ordre, on peut fixer la constante de temps à 0,03 secondes. A la sortie du premier filtre, on obtient alors un signal de position filtré $\theta_{clutch\_f}$. La fréquence de coupure du premier filtre peut par exemple valoir 10 Hz et être paramétrable lors de la mise au point du système.

Le signal de position $\theta_{clutch}$ issu du capteur 3 de position de pédale d'embrayage est également fourni à un deuxième filtre 28. Ce deuxième filtre est un filtre passe-bas. En utilisant par exemple un filtre du premier ordre, on peut fixer la constante de temps à 0,05 secondes. La fréquence de coupure du deuxième filtre peut par exemple valoir 10 Hz et être paramétrable lors de la mise au point du système. A la sortie du deuxième filtre, on obtient alors un signal de position filtré qui attaque un moyen de dérivation 30. Le signal issu du moyen de dérivation est un signal de la dérivée de la position filtrée de la pédale d'embrayage, ce signal est noté $\theta_{clutch\_f}$.

Les deux signaux obtenus tel que précédemment décrit ainsi que le signal issu du capteur de position de la pédale d'embrayage et la valeur du paramètre temporel $\Delta T_{ant}$ sont fournis à un moyen de calcul 29 dans lequel on effectue une série d'opérations mathématiques sur les signaux (qui seront détaillées plus loin) pour obtenir un signal de positon anticipée de la pédale d'embrayage $\theta_{clutch\_ant}$.

Un exemple de manière très simple de réaliser les filtres passe-bas consiste à utiliser des montages électroniques passifs à résistance et condensateur en série, le signal à filtrer étant appliqué aux bornes de l'ensemble série du montage et le signal filtré étant obtenu aux bornes du condensateur. Une réalisation numérique de filtre du premier ordre est aussi possible, par exemple :

$$Y(K) = -\frac{Ts - 2 \cdot \tau}{Ts + 2 \cdot \tau} \cdot Y(K-1) + \frac{Ts}{Ts + 2 \cdot \tau} \cdot [X(K) - X(K-1)]$$

avec Ts la période d'échantillonnage et T la constante de temps du filtre.

Le moyen de dérivation 30 peut être réalisé grâce au même type de montage, le signal à dériver étant appliquer aux bornes de l'ensemble série du montage et le signal dérivé étant obtenu aux bornes de la résistance. Une réalisation numérique est aussi possible, par exemple:

$$Y(K) = [X(K)-X(K-n)] / n \, Ts$$

avec Ts la période d'échantillonnage et n le nombre d'éléments pour la dérivation.

Les différents filtres, le moyen de dérivation et le moyen de calcul peuvent être logés dans un même composant électronique tel que notamment le calculateur 1 du dispositif d'assistance 8.

Dans un moyen d'interpolation/extrapolation 24, on utilise la courbe caractéristique d'embrayage et la position anticipée de la pédale d'embrayage pour obtenir, par interpolation ou extrapolation, une estimation de la valeur de couple transmis par l'embrayage ECT.

Cette valeur estimée de couple est comparée dans un comparateur 25 au couple $CT_{seuil}$ nécessaire pour faire avancer le véhicule. Si la valeur estimée du couple transmis à l'embrayage est supérieure au couple $CT_{seuil}$ nécessaire pour faire avancer le véhicule, la sortie du comparateur 25 est active ou à l'état haut.

Les sorties des comparateurs 21 et 25 attaquent une porte logique ET 26 commandant en sortie le desserrage ou le relâchement du système de freins lorsque celle-ci est active ou à l'état haut.

Un exemple de mode d'exécution du procédé de traitement selon l'invention est décrit ci-après en référence à la figure 4.

Dans une première étape 100, un signal de position $8_{clutch}$ de la pédale d'embrayage est déterminé à l'aide du capteur 3.

Dans une deuxième étape 110, ce signal est filtré à l'aide du filtre 27 pour établir un signal de position filtré $\theta_{clutch\_f}$.

Dans une troisième étape 115, le signal de position $\theta_{clutch}$ est filtré à l'aide du filtre 28 puis dérivé pour établir un signal de position filtré et dérivé $\theta'_{clutch\_f}$.

Tous ces signaux étant fournis au moyen de calcul 29, on teste, dans une étape 120, si la valeur instantanée du signal filtré $\theta_{clutch\_f}$ est inférieure à la valeur d'un paramètre $\theta_{clutch\_antLB}$. Si tel est le cas, on passe à une étape 130 dans laquelle le moyen de calcul fournit en sortie comme signal de position anticipée de la pédale d'embrayage $\theta_{clutch\_ant}$, le signal $\theta_{clutch}$ issu du capteur 3. Si tel n'est pas le cas, on passe à une étape 140.

Dans cette étape 140, on teste si la valeur absolue du produit de la valeur du paramètre temporel $\Delta T_{ant}$ par la valeur instantanée du signal de position filtré et dérivé $\theta'_{clutch\_f}$ est inférieure à la valeur d'un paramètre $\Delta\theta_{clutch\_ant\_max}$. Si tel est le cas, on passe à une étape 160 dans laquelle le moyen de calcul fournit en sortie comme signal de position anticipée de la pédale d'embrayage $\theta_{clutch\_ant}$, la somme du signal $\theta_{clutch}$ et du signal obtenu par le produit de la valeur du paramètre temporel $\Delta T_{ant}$ par le signal de position filtré et dérivé $\theta'_{clutch\_f}$ c'est-à-dire :

$$\theta_{clutch\_ant} = \theta_{clutch\_f} + \Delta T_{ant} \times \theta'_{clutch\_f}$$

Si tel n'est pas le cas, on passe à une étape 150.

Dans cette étape 150, on teste si le produit de la valeur du paramètre temporel $\Delta T_{ant}$ par la valeur instantanée du signal de position filtré et dérivé $\theta'_{clutch\_f}$ est positif. Si tel est le cas, on passe à une étape 170 dans laquelle le moyen de calcul fournit en sortie comme signal de positon anticipée de la pédale d'embrayage $\theta_{clutch\_ant}$, la somme du signal $\theta_{clutch}$ et de la valeur du paramètre $\Delta\theta_{clutch\_ant\_max}$, c'est-à-dire:

$$\theta_{clutch\_ant} = \theta_{clutch\_f} + \Delta\theta_{clutch\_ant\_max}.$$

Si tel n'est pas le cas, on passe à une étape 180, dans laquelle le moyen de calcul fournit en sortie comme signal de position anticipée de la pédale d'embrayage $\theta_{clutch\_ant}$, la différence entre le signal $\theta_{clutch}$ et la valeur du paramètre $\Delta\theta_{clutch\_ant\_max}$, c'est-à-dire:

$$\theta_{clutch\_ant} = \theta_{clutch\_f} - \Delta\theta_{clutch\_ant\_max}.$$

Les valeurs des différents paramètres évoqués précédemment sont stockées dans une mémoire du dispositif d'assistance, par exemple dans une mémoire du calculateur 1. Les valeurs de ces paramètres peuvent être constantes et prédéfinies. Alternativement, elles peuvent être variables et déterminées notamment en fonction de la situation dans laquelle se trouve le véhicule.

Ainsi, le paramètre $\theta_{clutch\_antLB}$ peut être déduit en cours de vie du véhicule à l'aide par exemple d'un paramètre $\Delta\theta_{clutch\_antLB}$ dont une valeur prédéfinie serait enregistrée en mémoire. En cours de vie du véhicule, on pourrait déterminer la valeur de position de la pédale d'embrayage dans laquelle les disques d'embrayage arrivent juste en contact et soustraire, à cette valeur de position, la valeur du paramètre $\Delta\theta_{clutch\_antLB}$. Ainsi la valeur du paramètre $\theta_{clutch\_antLB}$ serait variable au fil de l'usure de l'embrayage.

Les valeurs des paramètres $\Delta\theta_{clutch\_ant\_max}$ et $\Delta T_{ant}$ peuvent quant à elles varier en fonction d'autres paramètres mesurés par des capteurs du véhicule. Elles peuvent notamment varier avec la pente dans laquelle se trouve le véhicule. De préférence, la valeur du paramètre $\Delta T_{ant}$ est inférieure à 0,2 secondes. Si la valeur du paramètre $\Delta T_{ant}$ est nulle, il n'y a pas d'anticipation.

Grâce à un tel procédé de traitement, l'estimation de la valeur de position anticipée de la pédale d'embrayage est robuste. Les différentes perturbations influent peu sur cette valeur et le système de freinage peut être relâché au bon moment.

**Revendications**

1. Procédé de traitement d'un signal ($\theta_{clutch}$) issu d'un capteur de position (3) d'un organe de commande d'un embrayage d'un véhicule automobile (7) destiné à l'élaboration d'un signal traité ($\theta_{clutch\_ant}$) de position de l'organe de commande d'embrayage le signal traité de position étant utilisé dans un dispositif d'assistance aux manoeuvres en côte du véhicule automobile, **caractérisé en ce qu'**il comprend :

   - une phase de filtrage, par un premier filtre (27), du signal issu du capteur pour obtenir un premier signal filtré ($\theta_{clutch\_f}$),
   - une phase de substitution dans laquelle on fournit, comme signal traité, le premier signal filtré auquel on ajoute un deuxième signal si la valeur instantanée du premier signal filtré est supérieure à la valeur d'un premier paramètre de seuil ($\theta_{clutch-antLB}$) et dans laquelle on fournit, comme signal traité, le signal issu du capteur dans le cas contraire,

2. Procédé de traitement selon la revendication 1, **caractérisé en ce que** le deuxième signal est fonction d'un troisième signal ($\theta'_{clutch\_f}$) obtenu par filtrage, par un deuxième filtre (28), du signal issu du capteur puis par dérivation par rapport au temps du signal résultant.

3. Procédé de traitement selon la revendication 2, **caractérisé en ce que** le deuxième signal est borné par les valeurs d'un deuxième paramètre ($-\Delta\theta_{clutch\_ant\_Max}$) et d'un troisième paramètre ($\Delta\theta_{clutch\_ant\_max}$).

4. Procédé de traitement selon la revendication 3, **caractérisé en ce que** les valeurs des deuxième et troisième paramètres sont opposées.

5. Procédé de traitement selon l'une des revendications 2 à 4, **caractérisé en ce que** le deuxième signal est obtenu par multiplication du troisième signal ($\theta'_{clutch\_f}$) par la valeur d'un quatrième paramètre ($\Delta T_{ant}$).

6. Procédé de traitement selon la revendication 5, **caractérisé en ce que** la valeur du quatrième paramètre est une constante prédéfinie.

7. Procédé de traitement selon la revendication 5, **caractérisé en ce que** la valeur du quatrième paramètre est variable.

8. Procédé de traitement selon l'une des revendications précédentes, **caractérisé en ce que** la valeur du premier paramètre est une constante prédéfinie.

9. Procédé de traitement selon l'un des revendications 1 à 7, **caractérisé en ce que** la valeur du premier paramètre est déduite d'une grandeur caractéristique de l'organe de commande.

10. Support de données comprenant un algorithme pour la mise en oeuvre du procédé de traitement selon l'une des revendications précédentes.

11. Dispositif (22) de traitement du signal ($\theta_{clutch}$) issu d'un capteur de position d'un organe de commande d'un embrayage d'un véhicule automobile (7) destiné à l'élaboration d'un signal traité de position de l'organe de commande,

**EP 2 162 630 B1**

**caractérisé en ce qu'**il comprend des moyens matériels (1, 27, 28, 29, 30) et logiciels mettant en oeuvre le procédé de traitement selon l'une des revendications 1 à 9.

12. Dispositif de traitement selon la revendication 11, **caractérisé en ce que** les moyens matériels comprennent un premier filtre (27), un deuxième filtre (28), des moyens de calcul (29), une mémoire et des moyens de dérivation (30).

13. Dispositif d'assistance (8) aux manoeuvres en côte d'un véhicule automobile (7), **caractérisé en ce qu'**il comprend un dispositif de traitement selon l'une des revendications 11 à 12.

**Claims**

1. Method for processing a signal ($\theta_{clutch}$) originating from a position sensor (3) of a control member of a clutch of a motor vehicle (7), intended to generate a processed signal ($\theta_{clutch\_ant}$) relating to the position of the clutch control member, the processed position signal being used in device for assisting the maneuvering of the motor vehicle on a slope, **characterized in that** it comprises:

   - a filtering phase in which the signal originating from the sensor is filtered using a first filter (27), to obtain a first filtered signal ($\theta_{clutch\_f}$),
   - a substitution phase in which the first filtered signal is supplied as the processed signal, a second signal being added thereto if the instantaneous value of the first filtered signal is greater than the value of a first threshold parameter ($\theta_{clutch\_antLB}$), and in which, in the opposite case, the signal originating from the sensor is supplied as the processed signal.

2. Processing method according to Claim 1, **characterized in that** the second signal is a function of a third signal ($\theta'_{clutch\_f}$) obtained by filtering the signal originating from the sensor by a second filter (28), and then by derivation of the resulting signal with respect to time.

3. Processing method according to Claim 2, **characterized in that** the second signal is limited by the values of a second parameter ($-\Delta\theta_{clutch\_ant\_max}$) and of a third parameter ($\Delta\theta_{clutch\_ant\_max}$).

4. Processing method according to Claim 3, **characterized in that** the values of the second and third parameters are opposite.

5. Processing method according to any one of Claims 2 to 4, **characterized in that** the second signal is obtained by multiplying the third signal ($\theta'_{clutch\_f}$) by the value of a fourth parameter ($\Delta T_{ant}$).

6. Processing method according to Claim 5, **characterized in that** the value of the fourth parameter is a predetermined constant.

7. Processing method according to Claim 5, **characterized in that** the value of the fourth parameter is variable.

8. Processing method according to any one of the preceding claims, **characterized in that** the value of the first parameter is a predetermined constant.

9. Processing method according to any one of Claims 1 to 7, **characterized in that** the value of the first parameter is deduced from a characteristic quantity of the control member.

10. Data medium comprising an algorithm for implementing the processing method according to any one of the preceding claims.

11. Device (22) for processing the signal ($\theta_{clutch}$) originating from a position sensor of a control member of a clutch of a motor vehicle (7), intended to generate a processed signal relating to the position of the control member, **characterized in that** it comprises hardware (1, 27, 28, 29, 30) and software means implementing the processing method according to any one of Claims 1 to 9.

12. Processing device according to Claim 11, **characterized in that** the hardware means comprise a first filter (27), a second filter (28), computer means (29), a memory and derivation means (30).

7

**13.** Device (8) for assisting the maneuvering of a motor vehicle (7) on a slope, **characterized in that** it comprises a processing device according to any one of Claims 11 to 12.

**Patentansprüche**

**1.** Verfahren zum Verarbeiten eines Signals ($\theta_{clutch}$), das von einem Positionssensor (3) eines Steuerorgans einer Kupplung eines Kraftfahrzeugs (7) ausgegeben wird, das für die Auswertung eines verarbeiteten Positionssignals ($\theta_{clutch\_ant}$) des Kupplungssteuerorgans bestimmt ist, wobei das verarbeitete Positionssignal in einer Vorrichtung zur Unterstützung bei Manövern auf Seiten des Kraftfahrzeugs verwendet wird, **dadurch gekennzeichnet, dass** es enthält:

- eine Filterungsphase durch ein erstes Filter (27) des von dem Sensor ausgegebenen Signals, um ein erstes gefiltertes Signal ($\theta_{clutch\_f}$) zu erhalten,
- eine Ersetzungsphase, in der als das verarbeitete Signal das erste gefilterte Signal geliefert wird, zu dem ein zweites Signal hinzugefügt wird, falls der momentane Wert des ersten gefilterten Signals größer ist als der Wert eines ersten Schwellenparameters ($\theta_{clutch\_antLB}$), und in der andernfalls als das verarbeitete Signal das von dem Sensor ausgegebene Signal geliefert wird.

**2.** Verarbeitungsverfahren nach Anspruch 1, **dadurch gekennzeichnet, dass** das zweite Signal eine Funktion eines dritten Signals ($\theta'_{clutch\_f}$) ist, das durch Filterung durch ein zweites Filter (28) eines von dem Sensor ausgegebenen Signals und dann durch zeitliche Ableitung des resultierenden Signals erhalten wird.

**3.** Verarbeitungsverfahren nach Anspruch 2, **dadurch gekennzeichnet, dass** das zweite Signal durch die Werte eines zweiten Parameters ($-\Delta\theta_{clutch\_ant\_max}$) und eines dritten Parameters ($\Delta\theta_{clutch\_ant\_max}$) beschränkt ist.

**4.** Verarbeitungsverfahren nach Anspruch 3, **dadurch gekennzeichnet, dass** die Werte des zweiten und des dritten Parameters entgegengesetzt sind.

**5.** Verarbeitungsverfahren nach einem der Ansprüche 2 bis 4, **dadurch gekennzeichnet, dass** das zweite Signal durch Multiplikation des dritten Signals ($\theta'_{clutch\_f}$) mit dem Wert eines vierten Parameters ($\Delta T_{ant}$) erhalten wird.

**6.** Verarbeitungsverfahren nach Anspruch 5, **dadurch gekennzeichnet, dass** der Wert des vierten Parameters eine im Voraus definierte Konstante ist.

**7.** Verarbeitungsverfahren nach Anspruch 5, **dadurch gekennzeichnet, dass** der Wert des vierten Parameters variabel ist.

**8.** Verarbeitungsverfahren nach einem der vorhergehenden Ansprüche, **dadurch gekennzeichnet, dass** der Wert des ersten Parameters eine im Voraus definierte Konstante ist.

**9.** Verarbeitungsverfahren nach einem der Ansprüche 1 bis 7, **dadurch gekennzeichnet, dass** der Wert des ersten Parameters von einer charakteristischen Größe des Steuerorgans abgeleitet wird.

**10.** Datenträger, der einen Algorithmus für die Ausführung des Verarbeitungsverfahrens nach einem der vorhergehenden Ansprüche enthält.

**11.** Vorrichtung (22) für die Verarbeitung des Signals ($\theta_{clutch}$), das Von einem Positionssensor eines Steuerorgans einer Kupplung eines Kraftfahrzeugs (7) ausgegeben wird, die für die Auswertung eines verarbeiteten Positionssignals des Steuerorgans bestimmt ist, **dadurch gekennzeichnet, dass** sie Hardware-Mittel (1, 27, 28, 29, 30) und Software-Mittel enthält, die das Verarbeitungsverfahren nach einem der Ansprüche 1 bis 9 ausführen.

**12.** Verarbeitungsvorrichtung nach Anspruch 11, **dadurch gekennzeichnet, dass** die Hardware-Mittel ein erstes Filter (27), ein zweites Filter (28), Rechenmittel (29), einen Speicher und Ableitungsmittel (30) enthalten.

**13.** Assistenzvorrichtung (8) für Manöver auf Seiten eines Kraftfahrzeugs (7), **dadurch gekennzeichnet, dass** sie eine Verarbeitungsvorrichtung nach einem der Ansprüche 11 bis 12 enthält.

**Fig.1**

Reste du véhicule

Freins

Capteur de pente

Calculateur

Capteur pédale embrayage

6   2   1   5   8   3   7   4

**Fig.2**

Entrée capteurs

Acquisition et mise en forme des signaux

Détection du rapport de boîte

Commande de capture

Définition de la courbe caractéristique d'embrayage

MaJ de la courbe

Courbe caractéristique d'embrayage

Décollage

Sortie

10   12   11   14   15   16   17

Fig.3

Fig.4

**EP 2 162 630 B1**

**RÉFÉRENCES CITÉES DANS LA DESCRIPTION**

**Documents brevets cités dans la description**

- FR 2828450
- FR 2828450 A1